(19) Europäisches Patentamt
European Patent Office
Office européen des brevets

(11) **EP 4 772 260 A1**

(12) **EUROPEAN PATENT APPLICATION**
published in accordance with Art. 153(4) EPC

(43) Date of publication:
**08.07.2026  Bulletin 2026/28**

(21) Application number: **24859675.1**

(22) Date of filing: **26.08.2024**

(51) International Patent Classification (IPC):
**B01D 39/16** (2006.01)   **B01D 46/52** (2006.01)
**B32B 5/26** (2006.01)   **D04H 3/16** (2006.01)

(52) Cooperative Patent Classification (CPC):
**B01D 39/16; B01D 46/52; B32B 5/26; D04H 3/16**

(86) International application number:
**PCT/JP2024/030137**

(87) International publication number:
**WO 2025/047642 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.09.2023  JP 2023142440**

(71) Applicant: **Daikin Industries, Ltd.
Osaka-shi, Osaka 530-0001 (JP)**

(72) Inventors:
• **KIRITANI, Emi
Osaka-shi, Osaka 530-001 (JP)**
• **CHAEN, Shinichi
Osaka-shi, Osaka 530-001 (JP)**

(74) Representative: **Hoffmann Eitle
Patent- und Rechtsanwälte PartmbB
Arabellastraße 30
81925 München (DE)**

(54) **FILTER MEDIUM, FILTER PACK, AND FILTER UNIT**

(57)    There is provided a filter medium whose pressure loss can be suppressed, a filter pack, and a filter unit. A filter medium (30) includes a porous membrane (31), a support layer (32), and a fibrous adhesive (38) for bonding the porous membrane (31) and the support layer (32). A relationship of "average fiber diameter of porous membrane (31)": "average fiber diameter of adhesive (38)":"average fiber diameter of support layer (32)" = 1/2000 to 1/30:1 to 6:1 is satisfied. When viewed in a thickness direction of the filter medium (30), a plurality of fibers of the adhesive (38) do not overlap with each other, or a number of intersecting points of the fibers per one fiber is 3 or less.

FIG. 7

## Description

### TECHNICAL FIELD

The present disclosure relates to a filter medium, a filter pack, and a filter unit.

### BACKGROUND ART

In the related art, for example, a porous membrane (hereinafter, sometimes referred to as a "PTFE porous membrane") made of polytetrafluoroethylene (hereinafter, sometimes referred to as "PTFE") has been used as an air filter. Since the PTFE porous membrane has higher dust collection efficiency than glass fiber filter media at the same pressure loss, it is suitably used particularly for HEPA filters (High Efficiency Particulate Air Filters) and ULPA filters (Ultra Low Penetration Air Filters).

As such a filter, for example, PTL 1 (Japanese Unexamined Patent Application Publication No. 2009-297702) discloses an air filter medium in which a PTFE porous membrane and an air-permeable support member are stacked.

Summary of Invention

Technical Problem

The air filter medium described in PTL 1 is produced by thermally laminating the entire PTFE porous membrane and air-permeable support member with a pair of heated rolls. In order to bond the PTFE porous membrane and the air-permeable support member by the thermal lamination, the material of the air-permeable support member is limited to a material that can be thermally laminated.

On the other hand, it is possible to bond the PTFE porous membrane and another air-permeable layer with an adhesive. However, if the amount of the adhesive is increased to improve the bonding state, the pressure loss of a filter medium to be obtained increases.

Solution to Problem

A filter medium according to a first aspect is a filter medium including a porous membrane, a support layer, and a fibrous adhesive for bonding the porous membrane and the support layer. An average fiber diameter of the porous membrane, an average fiber diameter of the adhesive, and an average fiber diameter of the support layer satisfy a relationship of "average fiber diameter of porous membrane":"average fiber diameter of adhesive":"average fiber diameter of support layer" = 1/2000 to 1/30:1 to 6:1. When viewed in a thickness direction of the filter medium, a plurality of fibers of the adhesive do not overlap with each other, or a number of intersecting points of the fibers per one fiber is 3 or less.

The average length of the fibers of the adhesive may be, for example, 100 times or more the average fiber diameter of the adhesive.

The adhesive is not limited and may be a hot-melt adhesive.

The support layer is not limited and may be, for example, a nonwoven fabric.

In this filter medium, the number of points where the fibers of the adhesive overlap with each other between the porous membrane and the support layer can be decreased. Therefore, an increase in the distance between the porous membrane and the support layer in some portions due to overlapping of the fibers of the adhesive can be suppressed, which can improve the adhesion between the porous membrane and the support layer. Furthermore, the rate of increase in pressure loss due to the presence of the fibers of the adhesive can be suppressed. In addition, it is possible to keep low the number of portions where the fibers of the adhesive enter gaps between fibers of the support layer and the function of the adhesive is not demonstrated. Accordingly, the amount of the adhesive necessary for bonding the porous membrane and the support layer is kept low, and the pressure loss of the filter medium can be suppressed by suppressing the rate of increase in pressure loss due to the fibers of the adhesive.

A filter medium according to a second aspect is a filter medium including a porous membrane, a support layer, and a fibrous adhesive for bonding the porous membrane and the support layer. When viewed in a thickness direction of the filter medium, longitudinal directions of a plurality of fibers of the adhesive are each in a predetermined direction and are parallel to each other. When viewed in the thickness direction of the filter medium, the plurality of fibers of the adhesive each have a wavy shape having peak portions and valley portions.

It is preferable that when the filter medium is viewed in the thickness direction of the filter medium, the plurality of fibers of the adhesive do not overlap with each other, or that the number of intersecting points of the fibers per one fiber be three or less.

The average length of the fibers of the adhesive may be, for example, 100 times or more the average fiber diameter of the adhesive.

The adhesive is not limited and may be a hot-melt adhesive.

The support layer is not limited and may be, for example, a nonwoven fabric.

In this filter medium, since the adhesive is used in a wavy shape, it is possible to efficiently bond a large area of the porous membrane and a large area of the support layer. Although the adhesive is used in a wavy shape, the longitudinal directions of the fibers are parallel to each other, and therefore the overlapping placement of the fibers of the adhesive is suppressed. Since the overlapping of the fibers of the adhesive is suppressed as described above, it is possible to decrease the number of portions where the function of the adhesive is not demonstrated. Accordingly, the amount of the adhesive necessary for bonding the porous membrane and the support layer is decreased, and therefore the pressure loss of the filter medium can be suppressed.

A filter medium according to a third aspect is the filter medium according to the first aspect, wherein when viewed in the thickness direction of the filter medium, longitudinal directions of a plurality of fibers of the adhesive are each in a predetermined direction and are parallel to each other. When viewed in the thickness direction of the filter medium, the plurality of fibers of the adhesive each have a wavy shape having peak portions and valley portions.

In this filter medium, since the adhesive is used in a wavy shape, it is possible to efficiently bond a large area of the porous membrane and a large area of the support layer. Although the adhesive is used in a wavy shape, the longitudinal directions of the fibers are parallel to each other, and therefore the overlapping placement of the fibers of the adhesive is suppressed.

A filter medium according to a fourth aspect is the filter medium according to any one of the first aspect to the third aspect, wherein an amount of the adhesive is 1 $g/m^2$ or more and 5 $g/m^2$ or less.

In this filter medium, an increase in pressure loss can be suppressed by decreasing the amount of the adhesive while the adhesiveness between the porous membrane and the support layer is improved.

A filter medium according to a fifth aspect is the filter medium according to any one of the first aspect to the fourth aspect, wherein an average fiber diameter of the adhesive is 20 $\mu$m or more and 60 $\mu$m or less.

The average fiber diameter of the porous membrane may be, for example, 30 nm or more and 150 nm or less. The average fiber diameter of the support layer may be, for example, 5 $\mu$m or more and 30 $\mu$m or less.

In this filter medium, the pressure loss due to the presence of the fibers of the adhesive can be suppressed while the adhesiveness between the porous membrane and the support layer is improved.

A filter medium according to a sixth aspect is the filter medium according to any one of the first aspect to the fifth aspect, wherein when a virtual line of 1 cm in length is drawn in a direction perpendicular to a longitudinal direction of any one of the plurality of fibers of the adhesive, an average number of fibers of the adhesive intersecting the virtual line is two or more and three or less.

In this filter medium, the number of portions where the porous membrane and the support layer are separated can be decreased.

A filter medium according to a seventh aspect is the filter medium according to any one of the first aspect to the sixth aspect, wherein the support layer is flame-retardant.

The support layer exhibiting flame retardancy is preferably, for example, a support layer exhibiting flame retardancy equivalent to HF-1 according to UL 94-HF test method.

In this filter medium, combustion is suppressed.

A filter medium according to an eighth aspect is the filter medium according to any one of the first aspect to the seventh aspect, wherein the porous membrane is a polytetrafluoroethylene porous membrane.

In the case where the porous membrane is a polytetrafluoroethylene porous membrane, the adhesive is easily repelled, and the pressure loss increases if the amount of the adhesive is increased in order to improve the bonding state. However, even in such a case, an increase in pressure loss can be suppressed.

A filter medium according to a ninth aspect is the filter medium according to any one of the first aspect to the eighth aspect, wherein the adhesive contains at least one of a polyolefin resin and a polyamide resin.

In this filter medium, the amount of total organic carbon (TOC) of the filter medium can be kept low because there is little amount of organic substances generated from the adhesive while the adhesiveness between the polytetrafluoroethylene porous membrane and the adhesive is improved.

A filter medium according to a tenth aspect is the filter medium according to any one of the first aspect to the ninth aspect, wherein the adhesive is mainly composed of a polyolefin resin.

Among the constituent components of the adhesive, the polyolefin resin preferably has the highest weight percentage, and the adhesive is preferably composed of only the polyolefin resin.

In this filter medium, the amount of total organic carbon (TOC) of the filter medium can be kept low.

A filter medium according to an eleventh aspect is the filter medium according to any one of the first aspect to the tenth aspect, wherein the support layer contains one or two or more selected from the group consisting of polyethylene terephthalate (PET), polyethylene (PE), polyphenylene sulfide (PPS), and polyamide (PA). An amount of total organic carbon per unit area of the filter medium, the total organic carbon separating from the filter medium heated to 40°C when an inert gas is passed for 60 minutes through the filter medium, is 1000 $\mu$g/m$^2$ or less.

In this filter medium, even if the support layer has physical properties of easily generating total organic carbon, heating for bonding can be avoided by bonding the porous membrane and the support layer using the fibrous adhesive, which suppresses the generation of total organic carbon from the support layer due to heat.

A filter medium according to a twelfth aspect is the filter medium according to any one of the first aspect to the eleventh aspect, wherein the filter medium is used as an air filter for processing gas.

When this filter medium is used as an air filter, the pressure loss can be kept low.

A filter pack according to a thirteenth aspect is the filter medium according to any one of the first aspect to the twelfth aspect, wherein the filter medium is folded so as to have mountain-folded portions and valley-folded portions.

In this filter pack, the separation between the porous membrane and the support layer can be suppressed even when the filter pack is folded so as to have mountain-folded portions and valley-folded portions.

A filter unit according to a fourteenth aspect includes the filter medium according to any one of the first aspect to the twelfth aspect, or a pleated filter medium that is the filter medium according to any one of the first aspect to the twelfth aspect and is folded so as to have mountain-folded portions and valley-folded portions; and a frame body. The frame body holds the filter medium or the pleated filter medium.

## BRIEF DESCRIPTION OF DRAWINGS

[Fig. 1] Fig. 1 is a schematic cross-sectional view of the layer structure of a filter medium (part one).
[Fig. 2] Fig. 2 is a schematic cross-sectional view of the layer structure of a filter medium (part two).
[Fig. 3] Fig. 3 is a schematic cross-sectional view of the layer structure of a filter medium (part three).
[Fig. 4] Fig. 4 is a schematic exterior perspective view of a filter pack.
[Fig. 5] Fig. 5 is a schematic exterior perspective view of a filter unit.
[Fig. 6] Fig. 6 is a schematic configuration diagram of an adhesive application step.
[Fig. 7] Fig. 7 is a diagram illustrating one example of an applied pattern of fibers of an adhesive.
[Fig. 8] Fig. 8 is a diagram illustrating another example of an applied pattern of fibers of an adhesive.

## DESCRIPTION OF EMBODIMENTS

Hereafter, a filter medium, a filter pack, and a filter unit will be described using examples.

(1) Filter medium

The filter medium includes a porous membrane, a support layer, and a fibrous adhesive for bonding the porous membrane and the support layer.

The average fiber diameter of the porous membrane, the average fiber diameter of the adhesive, and the average fiber diameter of the support layer preferably satisfy the relationship of "average fiber diameter of porous membrane":"average fiber diameter of adhesive":"average fiber diameter of support layer" = 1/2000 to 1/30:1 to 6:1.

By using an adhesive whose average fiber diameter is 1 time or more the average fiber diameter of the support layer, entry of fibers of the adhesive into gaps between fibers of the support layer is suppressed. The average fiber diameter of the adhesive is more preferably 2.0 times or more the average fiber diameter of the support layer. By using an adhesive whose average fiber diameter is 6 times or less the average fiber diameter of the support layer, the rate of increase in pressure loss due to the fibers themselves of the adhesive can be suppressed. In the adhesive, the percentage of the number of fibers of the adhesive whose fiber diameter is larger than the average fiber diameter of the support layer with respect to the total number of fibers of the adhesive is preferably 90% or more.

By using an adhesive whose average fiber diameter is 30 times or more the average fiber diameter of the porous membrane, the influence of the fibers of the adhesive on the filter medium performance of the porous membrane can be suppressed. By using an adhesive whose average fiber diameter is, for example, 2000 times or less the average fiber diameter of the porous membrane, the rate of increase in pressure loss due to the fibers themselves of the adhesive can be readily suppressed.

By using a support layer whose average fiber diameter is 30 times or more the average fiber diameter of the adhesive, the porous membrane can be readily supported by the support layer even if it is difficult to independently use the porous membrane because of its small thickness, which can increase the rigidity of the filter medium.

The average fiber diameter of the porous membrane may be calculated, for example, as a number-average fiber diameter by randomly selecting 50 fibers from an image of a scanning electron micrograph. The average fiber diameter of the adhesive and the average fiber diameter of the support layer can be evaluated for fibers present within a predetermined region of an image observed using a microscope or the like and may be, for example, number-average fiber diameters for 200 fibers.

From the viewpoint of suppressing entry of fibers of the adhesive into gaps between fibers of the support layer, the average fiber diameter of the adhesive is preferably 20 $\mu$m or more and more preferably 30 $\mu$m or more. When the adhesive is used for bonding a porous membrane whose average fiber diameter is 30 nm or more and 150 nm or less, the average fiber diameter of the adhesive is preferably 60 $\mu$m or less and may be 55 $\mu$m or less from the viewpoint of suppressing the rate of increase in pressure loss due to the presence of the fibers of the adhesive.

The average length of the fibers of the adhesive is not limited and may be, for example, 100 times or more the average fiber diameter of the adhesive, and is preferably 500 times or more the average fiber diameter of the adhesive.

When a virtual line of 1 cm in length is drawn in a direction perpendicular to the longitudinal direction of any one of a plurality of fibers of the adhesive, the average number of fibers of the adhesive intersecting the virtual line is preferably 2 or more and 3 or less. The average number may be, for example, an average counted for 200 freely selected fibers of the adhesive. By arranging a plurality of fibers of the adhesive side by side, overlapping between the fibers of the adhesive can be suppressed, and bonding sites between the porous membrane and the support layer can be arranged uniformly. Since the average number of fibers of the adhesive intersecting the virtual line of 1 cm in length is 2 or more, the concentration of stress on a specific bonded portion when a force acts on the porous membrane or the support layer is suppressed, and a good bonded state is easily maintained. For example, when a bonded article of the porous membrane and the support layer is pleated, peeling of the porous membrane and the support layer during pleating can be suppressed. Since the average number of fibers of the adhesive intersecting the virtual line of 1 cm in length is 3 or less, an increase in the pressure loss of the filter medium is suppressed.

In cases where the number of fibers of the adhesive is approximately the same, such as a case where the average number of fibers of the adhesive intersecting the virtual line of 1 cm in length is approximately the same, there is a tendency that a larger average fiber diameter of the fibers of the adhesive leads to an increase in the applied amount per unit area (g/m$^2$). However, as described later, it has become clear that the rate of increase in pressure loss due to the fibers of the adhesive covering the porous membrane tends to be remarkably larger than the rate of increase in the applied amount per unit area of the adhesive. Therefore, from the viewpoint of sufficiently suppressing the rate of increase in pressure loss, the average fiber diameter of the adhesive is more preferably 1000 times or less the average fiber diameter of the porous membrane.

When viewed in the thickness direction of the filter medium, the plurality of fibers of the adhesive do not overlap with each other, or the number of fiber intersecting points per one fiber is 3 or less. The number of fiber intersecting points of the adhesive means an average number of fiber intersecting points per one fiber of the adhesive between the one fiber and other fibers of the adhesive. Although not limited, the number of fiber intersecting points may be determined as an average number of fiber intersecting points for 100 fibers of the adhesive within a freely selected region. The number of fiber intersecting points of the adhesive per one fiber of the adhesive is more preferably 2 or less. In points where fibers of the adhesive overlap with each other when viewed in the thickness direction of the filter medium, bonding between the porous membrane and the support layer can be achieved. However, since gaps between the porous membrane and the support layer widen at the points where fibers of the adhesive overlap with each other, sufficient bonding between the porous membrane and the support layer becomes difficult around the points where fibers of the adhesive overlap with each other. Therefore, the porous membrane floats from the support layer at some points, and it becomes difficult to ensure a uniform bonded state over the entire membrane. Accordingly, the number of points where fibers of the adhesive overlap with each other is preferably few. Even if points where fibers of the adhesive overlap with each other are formed, it is possible to obtain a good bonded state by sufficiently arranging fibers of the adhesive around the overlapping points. In that case, however, the amount of the adhesive required for bonding the porous membrane and the support layer increases, resulting in an increase in the pressure loss of the filter medium.

When viewed in the thickness direction of the filter medium, it is preferable that the longitudinal directions of the plurality of fibers of the adhesive each be in a predetermined direction and be parallel to one another. As a result, overlapping between the fibers of the adhesive can be made less likely to occur.

When viewed in the thickness direction of the filter medium, the shape of the fibers of the adhesive is preferably a wavy shape having peak portions and valley portions. At least half of the shape of the fibers of the adhesive is preferably a wavy shape having peak portions and valley portions, and 90% or more of the shape is preferably a wavy shape having peak portions and valley portions.

When viewed in the thickness direction of the filter medium, the adhesive preferably has a shape other than shapes in which overlapping between fiber portions in one fiber of the adhesive occurs. For example, the shape of the adhesive is preferably not helical or is preferably not a random application pattern.

From the viewpoint of improving the adhesion between the porous membrane and the support layer, the amount of the adhesive is preferably 1 g/m$^2$ or more and more preferably 2 g/m$^2$ or more between one porous membrane and one support layer when viewed in the thickness direction of the filter medium. From the viewpoint of suppressing an increase in pressure loss due to the presence of the fibers of the adhesive, the amount of the adhesive is preferably 5 g/m$^2$ or less and

more preferably 4 g/m² or less between one porous membrane and one support layer when viewed in the thickness direction of the filter medium.

From the viewpoint of keeping the amount of total organic carbon (TOC) of the filter medium low, it is preferable that the adhesive mainly contain at least one of a polyolefin resin and a polyamide resin, and it is preferable that the adhesive be mainly composed of a polyolefin resin. The adhesive is preferably not a rubber-based adhesive nor an acrylic-based adhesive. The weight percentage of the polyolefin resin in the adhesive is, for example, 70% or more and preferably 90% or more. From the viewpoint of suppressing an increase in pressure loss due to an excessively large fiber diameter of the adhesive, the melt viscosity of the adhesive at 180°C is preferably 2500 mPa·s or less and more preferably 2200 mPa·s or less. From the viewpoint of readily obtaining fibers that extend continuously while suppressing a state where discharged fibers are cut off and of readily controlling the position to be applied, the melt viscosity of the adhesive at 180°C is preferably 1000 mPa·s or more and more preferably 1500 mPa·s or more. From the viewpoint of suppressing the deterioration of the adhesive, the heating temperature at which the adhesive is melted is preferably 250°C or less and more preferably 200°C or less.

In a case where the adhesive is applied so that the peel strength between the porous membrane and the support layer in the filter medium is ensured to be 0.1 N/35 mm or more, the rate of increase in pressure loss obtained from the pressure loss of a stacked article obtained by stacking the porous membrane and the support layer without using the adhesive and the pressure loss of the filter medium obtained by bonding the porous membrane and the support layer using the adhesive is preferably 10% or less, more preferably 7% or less, and further preferably 6% or less. In a case where the adhesive is applied so that the peel strength between the porous membrane and the support layer in the filter medium is ensured to be 0.2 N/35 mm or more, the rate of increase in pressure loss is preferably 10% or less, more preferably 7% or less, and further preferably 6% or less. The rate of increase in pressure loss is calculated by the following formula.

Rate of increase in pressure loss (%) = (pressure loss of filter medium/pressure loss of stacked article) × 100 - 100

The porous membrane preferably has an average fiber diameter of, for example, 30 nm or more and 150 nm or less. This makes it possible to increase the collection efficiency.

The porous membrane is more preferably, for example, a fluororesin porous membrane that mainly contains a fluororesin and has a porous membrane structure including fibrils (fibers) and nodes (nodal portions) connected to the fibrils. Here, the term "mainly" means that, when a plurality of kinds of components are contained, the fluororesin is contained in the largest amount. The fluororesin porous membrane may contain, for example, 50 wt% or more of a fluororesin relative to the weight of the fluororesin porous membrane, preferably 80 wt% or more, more preferably 95 wt% or more, and may be composed only of a fluororesin. This can provide a filter medium having sufficient performance.

Examples of components different from the fluororesin contained in the fluororesin porous membrane include inorganic fillers that are non-fibrillatable non-melt-fabricable components.

The fluororesin used for the fluororesin porous membrane may be composed of one component or two or more components. The fluororesin is also, for example, a fluororesin containing a fibrillatable PTFE. The fluororesin is also, for example, a three-component mixture of the fibrillatable PTFE, the non-fibrillatable non-melt-fabricable component, and a non-fibrillatable melt-fabricable component having a melting point of less than 320°C. The melting point can generally be measured using a DSC (differential scanning calorimeter) and is one that appears as an endothermic peak. For a noncrystalline structure in which the melting point does not clearly appear, the softening point can be used instead. The softening point is identified using differential thermal analysis (DTA) as a temperature at which the slope of the DTA graph first changes.

The fibrillatable PTFE is a high-molecular-weight PTFE obtained through emulsion polymerization or suspension polymerization of tetrafluoroethylene (TFE). The high molecular weight herein is a molecular weight at which fibrillation is easily caused and fibrils having a large fiber length are obtained during drawing in the production of a porous membrane, the standard specific gravity (SSG) is 2.130 to 2.230, and the melt flow substantially does not occur because of the high melt viscosity. Whether fibrillation is achieved or not can be judged by checking whether paste extrusion, which is a typical method for molding a high-molecular-weight PTFE powder obtained from a polymer of TFE, can be performed or not. In the case where an unfired molded body obtained through paste extrusion substantially does not have strength or elongation, such as the case where the molded body has an elongation of 0% and is broken when stretched, such a molded body can be considered to have no fibrillability. The high-molecular-weight PTFE may be a modified polytetrafluoroethylene, a homo-polytetrafluoroethylene, or a mixture of a modified PTFE and a homo-PTFE.

Examples of the non-fibrillatable non-melt-fabricable component include components having thermoplasticity, such as low-molecular-weight PTFEs, thermosetting resins, inorganic fillers, and mixtures of the foregoing. The low-molecular-weight PTFE is a PTFE having a number-average molecular weight of 600,000 or less, a melting point of 320°C or more and 335°C or less, and a melt viscosity at 380°C of 100 Pa·s to $7.0 \times 10^5$ Pa·s.

The non-fibrillatable melt-fabricable component having a melting point of less than 320°C preferably exhibits a melt viscosity at 380°C of less than 10,000 Pa·s. The melting point of the non-fibrillatable melt-fabricable component is a temperature at a peak top of a heat-of-fusion curve obtained when the component is heated to a temperature higher than or equal to the melting point at a temperature-increasing rate of 10 °C/min to be completely melted once, cooled to a temperature lower than or equal to the melting point at 10 °C/min, and then heated again at 10 °C/min using a differential scanning calorimeter (DSC).

The fibrillatable PTFE, the non-fibrillatable non-melt-fabricable component, and the non-fibrillatable melt-fabricable component having a melting point of less than 320°C can be those described in detail, for example, in International Publication No. 2020/067182.

In the method for producing a fluororesin porous membrane, for example, a fine powder obtained by coagulation or co-coagulation from emulsion polymerization of TFE is subjected to dehydration and drying, then mixed with a liquid lubricant (extrusion aid), and paste-extruded to obtain a sheet-shaped extruded product. Then, a fluororesin porous membrane can be obtained by removing the liquid lubricant from an unfired film obtained by rolling the sheet-shaped extruded product with calender rolls or the like and performing drawing.

The thus-obtained fluororesin porous membrane preferably has a pressure loss of 300 Pa or less when air is passed therethrough at a flow rate of 5.3 cm/s. The pressure loss of the fluororesin porous membrane is not limited and may be 50 Pa or more.

The fluororesin porous membrane may have a particle collection efficiency of 99.00% or more, preferably 99.99% or more, when air containing NaCl particles having a particle diameter of 0.1 $\mu$m is passed therethrough at a flow rate of 5.3 cm/s.

The PF value of the fluororesin porous membrane is preferably 20 or more. The PF value is a value defined by the following formula PF value = {-log((100 - collection efficiency (%))/100)}/(pressure loss (Pa)/1000) using the pressure loss and the collection efficiency determined using NaCl particles having a particle diameter of 0.1 $\mu$m.

The thickness of the fluororesin porous membrane may be, for example, 1.0 $\mu$m or more and is preferably 3.0 $\mu$m or more. By increasing the thickness of the fluororesin porous membrane, the dust-holding capacity can be increased. The thickness of the fluororesin porous membrane is, for example, 300 $\mu$m or less and is preferably 200 $\mu$m or less. The thickness of a single fluororesin porous membrane can be determined by stacking five membranes to be measured, measuring the total thickness of the five membranes using a thickness meter (1D-110MH, manufactured by Mitutoyo Corporation), and dividing the total thickness by 5.

When the porous membrane is a fluororesin porous membrane, the adhesive preferably contains at least one of a polyolefin resin and a polyamide resin from the viewpoint that adhesion with the fluororesin porous membrane is good and that the amount of total organic carbon (TOC) of the filter medium can be kept low.

For example, the average fiber diameter of the support layer is preferably 5 $\mu$m or more and 30 $\mu$m or less and more preferably 10 $\mu$m or more and 25 $\mu$m or less. Thus, an increase in pressure loss due to an excessively large fiber diameter of the support layer is suppressed while the porous membrane is sufficiently supported.

The support layer may contain one or two or more selected from the group consisting of polyethylene terephthalate (PET), polyethylene (PE), polyphenylene sulfide (PPS), and polyamide (PA). Such a support layer may be a melt-blown nonwoven fabric, a spun-bonded nonwoven fabric, or the like. In a filter medium using this support layer, the amount of total organic carbon (TOC) per unit area of the filter medium, the total organic carbon separating from the filter medium heated to 40°C when an inert gas is passed for 60 minutes through the filter medium, is preferably 1000 $\mu$g/m$^2$ or less and more preferably 500 $\mu$g/m$^2$ or less. Even when the support layer contains a component that may generate an organic gas in a high-temperature environment, bonding of the porous membrane and the support layer is performed using an adhesive and the support layer is not necessarily heated to a molten state. Therefore, an increase in the amount of total organic carbon due to heating of the support layer is suppressed.

The support layer is preferably composed of fibers that do not have a core/sheath structure including a core portion and a sheath portion having a lower melting point than the core portion, and is preferably composed of fibers having a homogeneous cross-sectional structure.

The support layer is preferably flame-retardant. Specifically, the support layer preferably exhibits flame retardancy equivalent to HF-1 in the UL 94-HF test method. Since the filter medium is obtained by bonding the porous membrane and the support layer using an adhesive without melting the support layer, a material exhibiting flame retardancy is easily selected for the support layer of the filter medium.

The support layer preferably has a pressure loss of, for example, 10 Pa or less when air is passed therethrough at a flow rate of 5.3 cm/s.

The support layer may have a particle collection efficiency of 10% or less, preferably 5% or less, when air containing NaCl particles having a particle diameter of 0.1 $\mu$m is passed therethrough at a flow rate of 5.3 cm/s.

Such preferable physical properties of the support layer are the same for each layer even when a plurality of support layers are used.

As described above, since the porous membrane and the support layer are bonded using an adhesive, there is no need to perform bonding by partially melting either layer, and the selection of the material of the porous membrane or the material of the support layer is less prone to restrictions.

(2) Layer structure of filter medium

The layer structure of the filter medium is not limited.

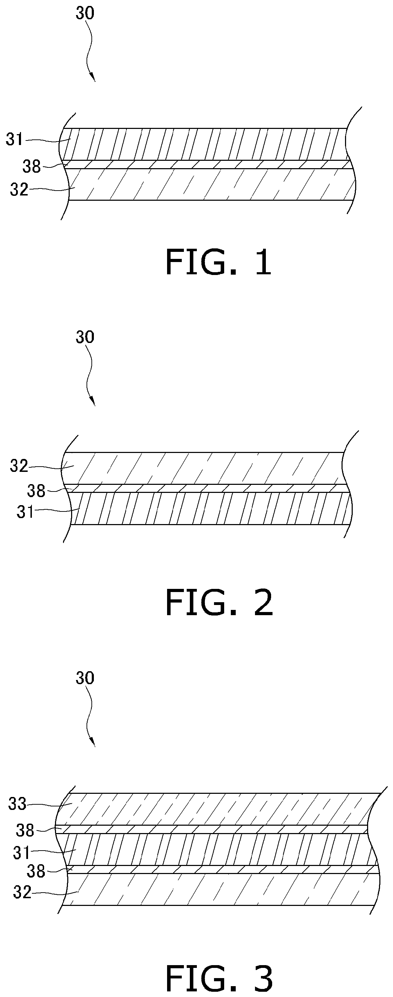

For example, as in a filter medium 30 illustrated in Fig. 1, a porous membrane 31 and a first support layer 32 may be stacked in the air flow direction so that an adhesive 38 is disposed between the porous membrane 31 and the first support layer 32. The first support layer 32 may be provided on the leeward side of the porous membrane 31 as illustrated in Fig. 1 or may be provided on the windward side of the porous membrane 31 as illustrated in Fig. 2. Alternatively, as illustrated in Fig. 3, the filter medium may include the first support layer 32 stacked in the air flow direction with respect to the porous membrane 31, and a second support layer 33 stacked on the side opposite to the first support layer 32 with respect to the porous membrane 31, such that the porous membrane 31 is supported from both the leeward side and the windward side. In this case, it is preferable that the adhesive 38 be disposed between the porous membrane 31 and the first support layer 32, and that the adhesive 38 be disposed between the porous membrane 31 and the second support layer 33.

(3) Air filter medium

The filter medium is preferably used as an air filter medium for capturing dust contained in an air flow.

The pressure loss of the air filter medium may be, for example, 400 Pa or less, and is preferably 300 Pa or less. The pressure loss of the air filter medium is not limited and may be 50 Pa or more. The pressure loss of the air filter medium can be measured as a pressure loss obtained when air is passed therethrough at a flow rate of 5.3 cm/s.

The air filter medium may have a particle collection efficiency of 99.00% or more, preferably 99.99% or more, when air containing NaCl particles having a particle diameter of 0.1 $\mu$m is passed therethrough at a flow rate of 5.3 cm/s.

For the air filter medium, the PF value defined by the following formula PF value = {-log((100 - collection efficiency (%))/100)}/(pressure loss (Pa)/1000) using the pressure loss and the collection efficiency determined using NaCl particles having a particle diameter of 0.1 $\mu$m is preferably, for example, 20 or more.

The thickness of the air filter medium is preferably, for example, 350 $\mu$m or more. When the air filter medium is used in a state having folded portions, the thickness of the air filter medium is preferably, for example, 1000 $\mu$m or less and more preferably 750 $\mu$m or less from the viewpoint of suppressing an excessive increase in the thickness at the folded portions. The thickness of the air filter medium is a thickness measured when a load of 0.3 N is applied to a measurement target using a specific measuring device.

In the air filter medium, it is preferable that the average fiber diameter of the porous membrane be 30 nm or more and 150 nm or less, that the average fiber diameter of the adhesive be 20 $\mu$m or more and 60 $\mu$m or less, and that the average fiber diameter of the support layer be 5 $\mu$m or more and 30 $\mu$m or less.

(4) Filter pack

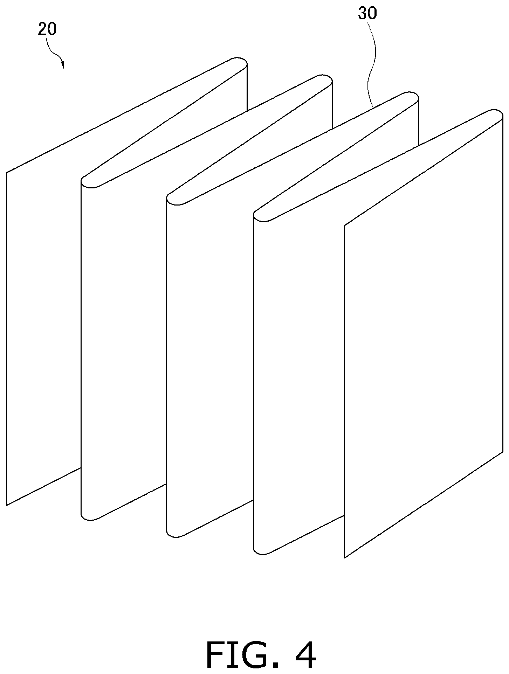

Next, a filter pack (pleated filter medium) of the present embodiment will be described with reference to Fig. 4.

Fig. 4 is an exterior perspective view of a filter pack 20 of the present embodiment.

The filter pack 20 includes the air filter medium described above (for example, the filter medium 30). The air filter medium of the filter pack 20 is a processed filter medium that has been processed (pleated) into a zigzag shape in which mountain folds and valley folds are alternately repeated. The pleating can be performed, for example, using a rotary folding machine. The folding width of the filter medium is not limited, and is, for example, 25 mm or more and 280 mm or less. By performing pleating, the folding area of the filter medium can be increased in the case where the filter pack 20 is used for a filter unit. Thus, a filter unit having high collection efficiency can be obtained.

The filter pack 20 may further include, in addition to the filter medium, spacers (not illustrated) for keeping pleat spacing when used for a filter unit. The material of the spacer is not limited, and a hot-melt resin can be preferably used. The filter medium 30 may have a plurality of embossed protrusions, and the pleat pitch may be maintained by the embossed protrusions.

(5) Filter unit

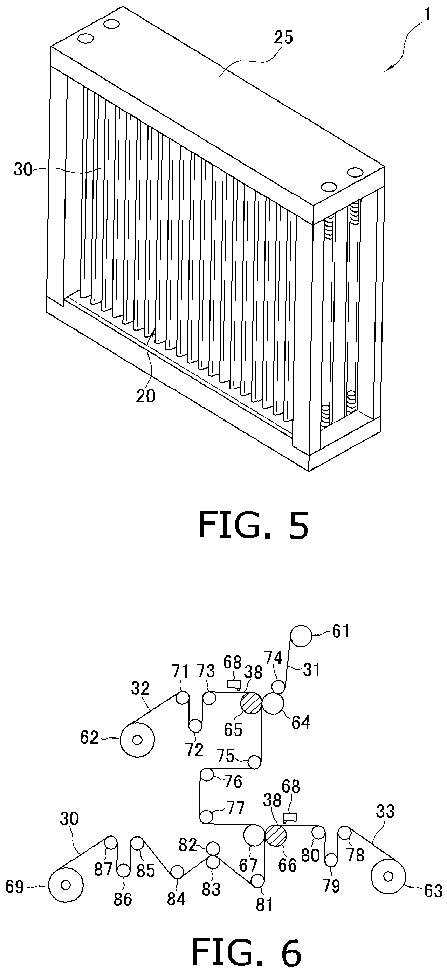

Next, a filter unit 1 will be described with reference to Fig. 5.

Fig. 5 is an exterior perspective view of a filter unit 1 of the present embodiment.

The filter unit 1 includes the air filter medium or the filter pack described above and a frame body 25 that holds the air filter medium or the filter pack (pleated filter medium). The filter unit 1 may be produced so that a filter medium that has not been folded into mountain and valley folds is held by the frame body, or may be produced so that the filter pack 20 is held by the frame body 25. The filter unit 1 illustrated in Fig. 5 is produced using the filter pack 20 and the frame body 25.

The frame body 25 is made, for example, by combining plate materials or by molding a resin, and the filter pack 20 and the frame body 25 are preferably sealed with each other using a sealant. The sealant is for preventing leakage between the filter pack 20 and the frame body 25 and is formed of, for example, a resin such as an epoxy resin, an acrylic resin, or a urethane resin.

The filter unit 1 including the filter pack 20 and the frame body 25 may be a mini-pleat filter unit in which one filter pack 20 extending in a flat plate shape is housed and held inside the frame body 25, or may be a V-bank filter unit or a single-header filter unit in which a plurality of filter packs extending in a flat plate shape are arranged side by side and held by the frame body.

(6) Examples of applications

The filter medium, the filter pack, and the filter unit according to the present embodiment are used for, for example, the following applications:

fields of, for example, ULPA filters (ultra low penetration air filters) (for producing semiconductors), HEPA filters (for hospitals and for producing semiconductors), cylindrical cartridge filters (for industrial use), bag filters (for industrial use), heat-resistant bag filters (for treating exhaust gas), heat-resistant pleated filters (for treating exhaust gas), SINBRAN (registered trademark) filters (for industrial use), catalyst filters (for treating exhaust gas), adsorbent-including filters (for installation in HDD), adsorbent-including vent filters (for installation in HDD), vent filters (e.g., for installation in HDD), filters for vacuum cleaners (for vacuum cleaners), general-purpose multilayered felt materials, cartridge filters for gas turbines (interchangeable components for gas turbines), and cooling filters (for casings of electronic devices);

fields of materials for freeze-drying such as freeze-drying bottles, automobile ventilation materials for electronic circuits and lamps, bottle applications such as bottle caps, protective ventilation for electronic devices, and ventilation/internal pressure regulation such as medical ventilation; and

masks of flat type, pleated type, three-dimensional type, and the like (for suppressing intrusion of dust, oil smoke, bacteria, viruses, and the like into the human body through the mouth and nose).

(7) Bonding of porous membrane and support layer with adhesive

The bonding process of the porous membrane and the support layer will be described below.

A porous membrane roll 61 wound into a roll is bonded to a support layer using, for example, an apparatus illustrated in Fig. 6. Here, a case where support layers 32 and 33 are bonded to both surfaces of a porous membrane 31 via an adhesive 38 will be described as an example. The porous membrane 31 may be a fluororesin porous membrane drawn in a longitudinal direction and a width direction.

In the apparatus illustrated in Fig. 6, the porous membrane 31 sequentially fed from the porous membrane roll 61 is supplied, via a roll 74, to a silicone rubber nip roll 64. A first support layer 32 sequentially fed from a first support layer roll 62 is supplied, via rolls 71, 72, and 73, to a temperature-controlled roll 65. An adhesive 38 discharged from a hot-melt gun 68 is applied to a surface of the first support layer 32 to which the porous membrane 31 is to be bonded, after the first support layer 32 passes through the roll 73 and before the first support layer 32 reaches the temperature-controlled roll 65. The temperature-controlled roll 65 adjusts the temperature so that the adhesive 38 applied to the first support layer 32 can maintain the adhesive strength. The first support layer 32 and the porous membrane 31 are bonded by being passed between the temperature-controlled roll 65 and the silicone rubber nip roll 64 with the adhesive 38 interposed between the first support layer 32 and the porous membrane 31. Then, a sheet-like article in which the first support layer 32 and the porous membrane 31 have been bonded is supplied, via rolls 75, 76, and 77, to a silicone rubber nip roll 67. A second support layer 33 sequentially fed from a second support layer roll 63 is supplied, via rolls 78, 79, and 80, to a temperature-controlled roll 66. An adhesive 38 discharged from a hot-melt gun 68 is applied to a surface of the second support layer 33 to which the porous membrane 31 is to be bonded, after the second support layer 33 passes through the roll 80 and before the second support layer 33 reaches the temperature-controlled roll 66. The temperature-controlled roll 66 adjusts the temperature so that the adhesive 38 applied to the second support layer 33 can maintain the adhesive strength. The second support layer 33 and the porous membrane 31 are bonded by being passed between the temperature-controlled roll 66 and the silicone rubber nip roll 67 with the adhesive 38 interposed between the second support layer 33 and the porous membrane 31. The sheet-like article in which the first support layer 32, the porous membrane 31, and the second support layer 33 are bonded as described above becomes a product via rolls 81, 82, 83, 84, 85, 86, and 87, and is wound onto a product roll 69.

The adhesive is preferably applied in a molten state. In order to suppress curing of the adhesive on the support layer, it is preferable to warm the support layer. Even in this case, heating at a temperature equal to or higher than the melting point of the support layer is not performed, and it is preferable to warm the support layer using the temperature-controlled rolls 65 and 66 at, for example, 35°C or more and 70°C or less, more preferably 40°C or more and 60°C or less. As a result, melting of the support layer is suppressed, which suppresses the deformation of fibers of the support layer. Furthermore, even when the support layer contains a component that may elute an organic gas due to heat, the elution of the organic gas from the support layer is also suppressed by suppressing melting of the support layer. From the same viewpoint, the support layer is preferably bonded to the porous membrane without being brought into a molten state even when heated by the temperature-controlled rolls 65 and 66.

Although the adhesive is heated to a molten state at the time of application, the adhesive is preferably not reheated after the application. By thus suppressing the heat history of the adhesive, even when the adhesive contains a component that may generate an organic gas due to heat, the generation of the organic gas can be suppressed.

The adhesive is preferably applied using an applicator. The applicator has a plurality of arranged discharge nozzles. A molten resin discharged from each discharge nozzle is preferably stretched by an air flow sent at a speed higher than the discharge speed in a discharge direction around each nozzle, thereby being applied with a desired fiber diameter. By lowering the melt viscosity of the molten resin, the adhesive is more easily stretched, so that the fiber diameter can be made finer. By increasing the speed of the air flow, the adhesive is more easily stretched, so that the fiber diameter can be made finer.

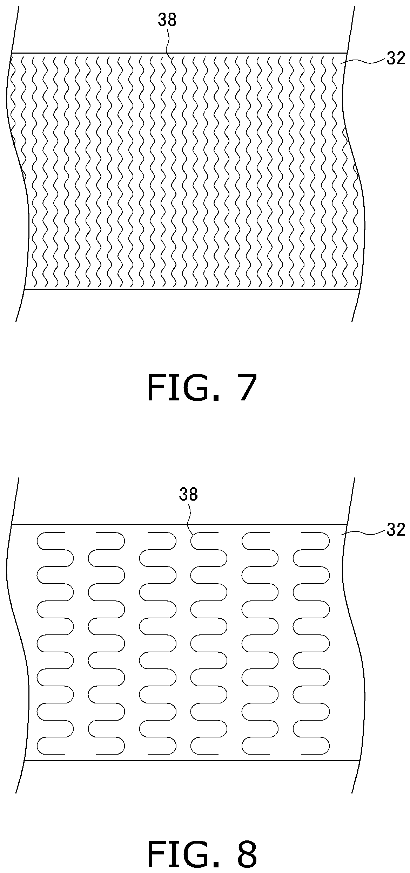

The application pattern of the adhesive is not limited. As illustrated in Figs. 7 and 8, a plurality of fibers of the adhesive are preferably arranged side by side so that the direction perpendicular to the conveyance direction of the support layer 32 is a longitudinal direction of the fibers of the adhesive. The application pattern of the adhesive may be, as illustrated in Fig. 7, a wavy shape having peak portions and valley portions that are alternately arranged. The peak portions protrude in a direction intersecting the longitudinal direction of the fibers of the adhesive and the valley portions protrude on a side opposite to the peak side in the direction intersecting the longitudinal direction of the fibers of the adhesive. Alternatively, as illustrated in Fig. 8, the application pattern may be a wavy shape in which peak portions and valley portions are alternately provided so as to have portions extending in a direction intersecting the longitudinal direction of the fibers of the adhesive.

The support layers 32 and 33 to which the adhesive has been applied as described above are superposed on the porous membrane 31, and pressure is applied by the nip rolls 64 and 67. At this time, by pressing the support layers 32 and 33 and the porous membrane 31 against each other, a filter medium 30 is obtained. Here, from the viewpoint of suppressing an increase in the rate of increase in pressure loss due to pressure at the time of stacking, the pressure applied by the nip rolls 64 and 67 to a stacked body of the porous membrane and the support layers attached with the adhesive is preferably, for example, 0.6 MPa or less. From the viewpoint of easily ensuring a good bonded state, the pressure applied by the nip rolls 64 and 67 to the stacked body of the porous membrane and the support layers attached with the adhesive is preferably, for example, 0.3 MPa or more. The pressure can be measured, for example, as an instantaneous pressure when passing between rolls using a pressure-measuring film (Prescale manufactured by FUJIFILM Corporation). The nip rolls 64 and 67 are preferably not heated to temperatures equal to or higher than the melting points of the support layers 32 and 33.

For example, in a method of production in which a porous membrane obtained by drawing is transferred, without being wound into a roll shape, directly to a step of bonding a support layer, it is necessary to store a thick air filter medium including the support layer in a roll shape, which requires a large space. In contrast, space saving can be achieved by winding, into a roll shape for storage, a porous membrane in a state where the support layer is not bonded as described above and by performing the bonding step to obtain a filter medium for shipment when a filter medium having a support layer bonded thereto is needed.

When the support layer is melted to be bonded to the porous membrane, a long time is required to heat the support layer using a heating roller until the fibers of the support layer become molten. Therefore, the bonding step can be performed in a shorter time by bonding the support layer to the porous membrane by applying an adhesive. Here, when the porous membrane is obtained by performing drawing over a predetermined time during the production of the porous membrane, the time required for bonding the porous membrane and the support layer may be shorter than the time required for drawing the porous membrane. Therefore, in a method of production in which a porous membrane obtained by drawing is transferred, without being wound into a roll shape, directly to a step of bonding a support layer, the step of drawing the porous membrane is a rate-determining step. In contrast, in a method of production in which a large number of porous membrane rolls that can be stored in a space-saving manner are prepared in advance and a bonding step with the support layer is performed while the porous membrane wound into a roll shape is fed, an air filter medium can be quickly obtained while space saving is achieved.

Examples

The details of the present disclosure will be specifically described below with reference to Examples and Comparative Examples.

In Example 1, a filter medium was obtained by bonding, using an adhesive, a fluororesin porous membrane obtained as described below to a support layer.

First, 300 g of a hydrocarbon oil ("IP Solvent 2028" manufactured by Idemitsu Kosan Co., Ltd.) serving as an extrusion liquid lubricant was added to and mixed with 1 kg of a PTFE fine powder having an average molecular weight of 6,500,000 ("POLYFLON Fine Powder F106" manufactured by Daikin Industries, Ltd.) at 20°C. Next, the obtained mixture was extruded using a paste extrusion apparatus to obtain a rod-shaped molded body. The rod-shaped molded body was formed into a sheet shape using calender rolls heated to 70°C to obtain a fluororesin sheet. The fluororesin sheet was passed through a hot-air drying oven at 250°C to evaporatively remove the hydrocarbon oil to obtain a band-shaped unfired fluororesin sheet having an average thickness of 200 $\mu$m and an average width of 150 mm.

Next, the unfired fluororesin sheet was drawn at a drawing ratio of 5 times in the longitudinal direction. The drawing temperature in the longitudinal direction was 250°C. Here, the drawing rate (%/s) in the longitudinal direction was 150 (%/s).

Next, the drawn unfired fluororesin sheet was drawn at a drawing ratio of 30 times in the width direction at a drawing temperature of 350°C using a tenter capable of continuous clipping to obtain a fluororesin porous membrane. The fluororesin porous membrane was wound into a porous membrane roll. The obtained fluororesin porous membrane had an average fiber diameter of 69 nm.

Then, a support layer to which an adhesive had been applied was stacked on the fluororesin porous membrane being fed from the porous membrane roll on the leeward side in the passage direction of the air flow, and the support layer was bonded to the fluororesin porous membrane through a nip roll to obtain a filter medium of Example 1.

The support layer used in Example 1 was a spun-bonded nonwoven fabric composed of PET (average fiber diameter: 11 $\mu$m, basis weight: 40 g/m$^2$, thickness: 230 $\mu$m). In Example 1, "the average fiber diameter of the porous membrane"/"the average fiber diameter of the support layer" was 0.0063.

The adhesive used in Example 1 was an olefin hot-melt resin having a melt viscosity at 180°C of 1600 mPa·s ("ASAHIMELT FR921" manufactured by Asahi Chemical Synthetic Co., Ltd.).

The adhesive was spray-applied to the support layer at a line speed of 30 m/min using an applicator manufactured by ITW Dynatec K.K. The applicator used was an applicator provided with a plurality of nozzles having mutually parallel discharge directions for discharging the adhesive. The application was controlled so that the air flow speed was higher than the discharge speed of the adhesive, whereby fibers of the adhesive stretched relative to the support layer were applied in a waveform. The opening size at the tip of each nozzle in the applicator was 0.43 $\mu$m$^2$, the size of the air discharge port was 0.64 $\mu$m$^2$, and the center-to-center distance between the nozzles was 1.6 mm. The pump speed for feeding the adhesive heated to 180°C to be in a molten state was set to 6.4%. Air heated to 190°C was sent at a flow rate of 3000 cm$^3$/min to stretch the fibers of the adhesive after discharging the adhesive in a molten state from the nozzles. The adhesive applied as described above had an average fiber diameter of 48.7 $\mu$m, and the applied amount of the adhesive was 3.2 g/m$^2$. In Example 1, "the average fiber diameter of the adhesive"/"the average fiber diameter of the support layer" was 4.43.

In Example 1, there were substantially no points where a plurality of fibers of the adhesive overlapped with each other. Furthermore, in Example 1, when a virtual line of 1 cm in length was drawn in a direction perpendicular to the longitudinal direction of any one of the plurality of fibers of the adhesive, the average number of fibers of the adhesive intersecting the virtual line was 2.5. In Example 1, the nip pressure applied when the support layer was bonded to the fluororesin porous membrane through the nip roll was 0.40 Pa.

In Example 1, when the peel strength (N/35 mm) of the bonded porous membrane and support layer was measured, the peel strength was 0.15 (N/35 mm). The peel strength was measured based on the test method of JIS Z 0237:2009 180-degree peel test using a precision universal testing machine manufactured by Shimadzu Corporation, with a specimen width of 35 mm and a tensile speed of 100 mm/min (the same applies hereinafter).

Example 2 was the same as Example 1 except that a hot-melt resin having a melt viscosity at 180°C of 2050 mPa·s ("ASAHIMELT FR530" manufactured by Asahi Chemical Synthetic Co., Ltd.) was used, the average fiber diameter of the adhesive was 42.6 $\mu$m, the applied amount of the adhesive was 3.0 g/m$^2$, and the nip pressure was 0.55 Pa. In Example 2, "the average fiber diameter of the adhesive"/"the average fiber diameter of the support layer" was 3.87. In Example 2, when the peel strength (N/35 mm) of the bonded porous membrane and support layer was measured, the peel strength was 0.15 (N/35 mm).

Example 3 was the same as Example 2 except that the material of the support layer was changed to a PET material in which a phosphorus-based flame retarder was copolymerized (average fiber diameter: 12 $\mu$m, basis weight: 50 g/m$^2$, thickness: 260 $\mu$m), the average fiber diameter of the adhesive was 45.8 $\mu$m, the applied amount of the adhesive was 3.1 g/m$^2$, and the nip pressure was 0.45 Pa. In Example 3, "the average fiber diameter of the porous membrane"/"the average fiber diameter of the support layer" was 0.0058. In Example 3, "the average fiber diameter of the adhesive"/"the average fiber diameter of the support layer" was 3.82. In Example 3, when the peel strength (N/35 mm) of the bonded porous membrane and support layer was measured, the peel strength was 0.15 (N/35 mm).

Example 4 was the same as Example 1 except that the hot-melt resin of the adhesive was changed to "Tohmide 1310" manufactured by Fuji Kasei Co., Ltd., having a melt viscosity at 180°C of 2500 mPa·s, the applied amount of the adhesive was 3.4 g/m$^2$, and the nip pressure was 0.45 Pa. In Example 4, "the average fiber diameter of the adhesive"/"the average fiber diameter of the support layer" was 4.94. In Example 4, when the peel strength (N/35 mm) of the bonded porous membrane and support layer was measured, the peel strength was 0.17 (N/35 mm).

Comparative Example 1 was the same as Example 1 except that a hot-melt resin having a melt viscosity at 180°C of 4000 mPa·s ("TECHNOMELT MP801" manufactured by Henkel) was used, the average fiber diameter of the adhesive was 71.6 μm, the applied amount of the adhesive was 4.2 g/m$^2$, and the nip pressure was 0.55 Pa. In Comparative Example 1, "the average fiber diameter of the adhesive"/"the average fiber diameter of the support layer" was 6.51. In Comparative Example 1, when the peel strength (N/35 mm) of the bonded porous membrane and support layer was measured, the peel strength was 0.2 (N/35 mm).

Comparative Example 2 was the same as Example 1 except that a hot-melt resin having a melt viscosity at 180°C of 4100 mPa·s ("ASAHIMELT FR561" manufactured by Asahi Chemical Synthetic Co., Ltd.) was used, the average fiber diameter of the adhesive was 98.3 μm, the applied amount of the adhesive was 4.8 g/m$^2$, and the nip pressure was 0.50 Pa. In Comparative Example 2, "the average fiber diameter of the adhesive"/"the average fiber diameter of the support layer" was 8.94. In Comparative Example 2, when the peel strength (N/35 mm) of the bonded porous membrane and support layer was measured, the peel strength was 0.25 (N/35 mm).

For each of Examples 1 to 4 and Comparative Examples 1 and 2, the rate of increase in pressure loss due to bonding was determined by measuring the pressure loss of a stacked article in a state where the porous membrane and the support layer are merely stacked and not bonded to each other and the pressure loss of a filter medium after the porous membrane and the support layer are bonded using an adhesive.

(Pressure loss of stacked article before bonding)

A measurement sample in which the support layer was merely stacked on the porous membrane without bonding was set in a filter holder having a diameter of 100 mm. The pressure on the inlet side was increased using a compressor, and the flow rate of air passing through the measurement sample was adjusted to 5.3 cm/s using a velocimeter. The pressure loss at this time was measured using a manometer.

(Pressure loss of filter medium after bonding)

A measurement sample of a filter medium in which the porous membrane and the support layer were bonded using an adhesive was set in a filter holder having a diameter of 100 mm. The pressure on the inlet side was increased using a compressor, and the flow rate of air passing through the measurement sample was adjusted to 5.3 cm/s using a velocimeter. The pressure loss at this time was measured using a manometer.

(Rate of increase in pressure loss)

From the pressure loss of the stacked article and the pressure loss of the filter medium measured as described above, the rate of increase in pressure loss was calculated according to the following formula.

Rate of increase in pressure loss (%) = (pressure loss of filter medium/pressure loss of stacked article) $\times$ 100 - 100

The measurement results of Examples and Comparative Examples are shown below.

[Table 1]

|  | Average fiber diameter of adhesive (μm) | Rate of increase in pressure loss (%) |
|---|---|---|
| Example 1 | 48.7 | 5.7 |
| Example 2 | 42.6 | 1.5 |
| Example 3 | 45.8 | 2.7 |
| Example 4 | 54.3 | 7.7 |
| Comparative Example 1 | 71.6 | 15.8 |
| Comparative Example 2 | 98.3 | 17.2 |

Referring to Table 1, it was confirmed that when the average fiber diameter of the adhesive was increased, there was a tendency that the rate of increase in pressure loss due to the fibers of the adhesive covering the porous membrane becomes remarkably large. In particular, comparing Example 2 and Comparative Example 1 in which the nip pressure was the same, it can be understood that the rate of increase in pressure loss becomes remarkably large as the average fiber diameter of the adhesive increases.

In Comparative Example 3, a filter medium was obtained in the same manner as in Example 1 except that a synthetic rubber-based hot-melt resin having a melt viscosity at 180°C of 2300 mPa·s ("939S" manufactured by Sanyo Life Material Co., Ltd.) was used, the average fiber diameter of the adhesive was 102.2 $\mu$m, the applied amount of the adhesive was 4.7 g/m$^2$, and the nip pressure was 0.55 Pa. In the filter medium of Comparative Example 3, the rate of increase in pressure loss was 43.1%.

Example 5 was the same as Example 1 except that a hot-melt resin having a melt viscosity at 180°C of 1600 mPa·s ("ASAHIMELT FR921" manufactured by Asahi Chemical Synthetic Co., Ltd.) was used, the average fiber diameter of the adhesive was 45.3 $\mu$m, the applied amount of the adhesive was 3.1 g/m$^2$, and the nip pressure was 0.75 Pa. In the filter medium of Example 5, the rate of increase in pressure loss was 23.1%.

Example 6 was the same as Example 1 except that a hot-melt resin having a melt viscosity at 180°C of 2050 mPa·s ("ASAHIMELT FR530" manufactured by Asahi Chemical Synthetic Co., Ltd.) was used, the average fiber diameter of the adhesive was 43.7 $\mu$m, the applied amount of the adhesive was 3.0 g/m$^2$, and the nip pressure was 0.90 Pa. In the filter medium of Example 6, the rate of increase in pressure loss was 50.8%.

In Examples 5 and 6, the rate of increase in pressure loss is high because the nip pressure is increased.

In Reference Example 1, a filter medium was obtained in the same manner as in Example 1 except that a PP-based hot-melt resin was used as the adhesive, the adhesive was spray-applied using an applicator provided with a plurality of nozzles whose discharge directions were oriented in random directions, the average fiber diameter of the adhesive was 116 $\mu$m, the applied amount of the adhesive was 5 g/m$^2$, and a PET material in which a phosphorus-based flame retarder was copolymerized (average fiber diameter: 12 $\mu$m, basis weight: 50 g/m$^2$, thickness: 260 $\mu$m) was used as a support layer. In Reference Example 1, when the peel strength (N/35 mm) of the bonded porous membrane and support layer was measured, the porous membrane broke without being able to peel the porous membrane from the support layer.

In Reference Example 1, since the fibers of the adhesive were applied randomly, many overlaps of fibers of the adhesive occurred. Specifically, in Reference Example 1, the number of overlapping points between fibers of the adhesive per one fiber of the adhesive were confirmed to be five on average. In Reference Example 1, although the bonding was so strong that the breakage of the membrane occurred in the confirmation of peel strength, the rate of increase in pressure loss was 39.2%.

In Reference Example 2, a filter medium was obtained in the same manner as in Example 1 except that an EVA-based hot-melt resin was used as the adhesive, the adhesive was applied by a sintering method in which a powdery adhesive was applied to the support layer and melted in a furnace, the average diameter determined by approximating the cross-section of powdery particles to a circle was 600 $\mu$m, which was a concept corresponding to the average fiber diameter of the adhesive, the applied amount of the adhesive was 10 g/m$^2$, and a PET material in which a phosphorus-based flame retarder was copolymerized (average fiber diameter: 12 $\mu$m, basis weight: 50 g/m$^2$, thickness: 260 $\mu$m) was used as a support layer. In Reference Example 2, when the peel strength (N/35 mm) of the bonded porous membrane and support layer was measured, the porous membrane broke without being able to peel the porous membrane from the support layer.

In Reference Example 2, the amount of the powdery adhesive used tends to be large due to the sintering method, and the powdery adhesive tends to fill the gaps between the fibers of the support layer, so that the pressure loss tends to increase. In Reference Example 2, although the bonding was so strong that the breakage of the membrane occurred in the confirmation of peel strength, the rate of increase in pressure loss was 37.5%.

For each of the filter media of Examples 1 to 6 and Comparative Examples 1 to 3, the outgassing amount was measured by the dynamic headspace method as follows. In the measurement of the outgassing amount, a test piece of 120 mm $\times$ 40 mm was placed in a constant-temperature chamber at 40°C for 60 minutes so as to desorb organic substances from the test piece. A 99.9999% high-purity helium gas was passed through the constant-temperature chamber, and the gas after passing through the chamber was sent to an adsorption tube to collect the organic substances generated. The collected organic substances were analyzed by gas chromatography-mass spectrometry (GC-MS). The outgassing amount was 52 $\mu$g/m$^2$ in Example 1, 112 $\mu$g/m$^2$ in Example 2, 454 $\mu$g/m$^2$ in Example 3, 150 $\mu$g/m$^2$ in Example 4, 114 $\mu$g/m$^2$ in Comparative Example 1, 68 $\mu$g/m$^2$ in Comparative Example 2, 850 $\mu$g/m$^2$ in Comparative Example 3, 60 $\mu$g/m$^2$ in Example 5, and 105 $\mu$g/m$^2$ in Example 6. In Comparative Example 3 in which a synthetic rubber-based hot-melt resin was used as the adhesive, it was confirmed that the outgassing amount particularly increased.

The outgassing amount was measured under the same conditions for a conventional product 1 and a conventional product 2 described below. The outgassing amount was 550 $\mu$g/m$^2$ in the conventional product 1 and 814 $\mu$g/m$^2$ in the conventional product 2.

The conventional product 1 was a filter medium obtained by thermally laminating a fluororesin porous membrane and a core-sheath nonwoven fabric having a core formed of PE and a sheath formed of PET (spun-bonded nonwoven fabric manufactured by PT MULTI SPUNINDO JAYA).

## EP 4 772 260 A1

The conventional product 2 was a filter medium obtained by thermally laminating a fluororesin porous membrane and a core-sheath nonwoven fabric having a core formed of PE and a sheath formed of PET ("ELEVES" manufactured by UNITIKA Ltd.).

For each of the filter media of Examples 1 to 4, Comparative Examples 1 and 2, and the conventional products 1 and 2, a combustibility test according to the UL 94-HF test method was conducted. The results were as follows: Example 1, HF-1 equivalent; Example 2, HF-1 equivalent; Example 3, HF-1 equivalent; Example 4, HF-1 equivalent; Comparative Example 1, HF-1 equivalent; Comparative Example 2, HF-1 equivalent; the conventional product 1, HBF equivalent; and the conventional product 2, HBF equivalent.

Although embodiments of the present disclosure have been described above, it will be understood that various changes in form and details can be made without departing from the gist and scope of the present disclosure as set forth in the claims.

### REFERENCE SIGNS LIST

| | |
|---|---|
| 1 | filter unit |
| 20 | filter pack, pleated filter medium |
| 25 | frame body |
| 30 | filter medium |
| 31 | porous membrane |
| 32 | first support layer (support layer) |
| 33 | second support layer (support layer) |
| 38 | adhesive |

### CITATION LIST

### PATENT LITERATURE

PTL 1: Japanese Unexamined Patent Application Publication No. 2009-297702

### Claims

1. A filter medium (30) comprising a porous membrane (31), a support layer (32, 33), and a fibrous adhesive (38) for bonding the porous membrane and the support layer,

   wherein an average fiber diameter of the porous membrane, an average fiber diameter of the adhesive, and an average fiber diameter of the support layer satisfy a relationship of "average fiber diameter of porous membrane":"average fiber diameter of adhesive":"average fiber diameter of support layer" = 1/2000 to 1/30:1 to 6:1, and when viewed in a thickness direction of the filter medium, a plurality of fibers of the adhesive do not overlap with each other, or a number of intersecting points of the fibers per one fiber is 3 or less.

2. A filter medium (30) comprising a porous membrane (31), a support layer (32, 33), and a fibrous adhesive (38) for bonding the porous membrane and the support layer,

   wherein when viewed in a thickness direction of the filter medium, longitudinal directions of a plurality of fibers of the adhesive are each in a predetermined direction and are parallel to each other, and
   when viewed in the thickness direction of the filter medium, the plurality of fibers of the adhesive each have a wavy shape having peak portions and valley portions.

3. The filter medium according to claim 1,

   wherein when viewed in the thickness direction of the filter medium, longitudinal directions of the plurality of fibers of the adhesive are each in a predetermined direction and are parallel to each other, and
   when viewed in the thickness direction of the filter medium, the plurality of fibers of the adhesive each have a wavy shape having peak portions and valley portions.

4. The filter medium according to any one of claims 1 to 3, wherein an amount of the adhesive is 1 g/m$^2$ or more and 5 g/m$^2$ or less.

5. The filter medium according to any one of claims 1 to 4, wherein an average fiber diameter of the adhesive is 20 $\mu$m or more and 60 $\mu$m or less.

6. The filter medium according to any one of claims 1 to 5, wherein when a virtual line of 1 cm in length is drawn in a direction perpendicular to a longitudinal direction of any one of the plurality of fibers of the adhesive, an average number of fibers of the adhesive intersecting the virtual line is two or more and three or less.

7. The filter medium according to any one of claims 1 to 6, wherein the support layer is flame-retardant.

8. The filter medium according to any one of claims 1 to 7, wherein the porous membrane is a polytetrafluoroethylene porous membrane.

9. The filter medium according to any one of claims 1 to 8, wherein the adhesive contains at least one of a polyolefin resin and a polyamide resin.

10. The filter medium according to any one of claims 1 to 9, wherein the adhesive is mainly composed of a polyolefin resin.

11. The filter medium according to any one of claims 1 to 10,

   wherein the support layer contains one or two or more selected from the group consisting of polyethylene terephthalate, polyethylene, polyphenylene sulfide, and polyamide, and
   an amount of total organic carbon per unit area of the filter medium, the total organic carbon separating from the filter medium heated to 40°C when an inert gas is passed for 60 minutes through the filter medium, is 1000 $\mu$g/m$^2$ or less.

12. The filter medium according to any one of claims 1 to 11, wherein the filter medium is used as an air filter for processing gas.

13. A filter pack (20) comprising the filter medium according to any one of claims 1 to 12, wherein the filter medium is folded so as to have mountain-folded portions and valley-folded portions.

14. A filter unit (1) comprising:

   the filter medium (30) according to any one of claims 1 to 12, or a pleated filter medium (20) that is the filter medium according to any one of claims 1 to 12 and is folded so as to have mountain-folded portions and valley-folded portions; and
   a frame body (25) for holding the filter medium or the pleated filter medium.

FIG. 1

FIG. 2

FIG. 3

FIG. 4

FIG. 5

FIG. 6

FIG. 7

FIG. 8

## INTERNATIONAL SEARCH REPORT

| International application No. |
| --- |
| **PCT/JP2024/030137** |

### A. CLASSIFICATION OF SUBJECT MATTER

**B01D 39/16**(2006.01)i; **B01D 46/52**(2006.01)i; **B32B 5/26**(2006.01)i; **D04H 3/16**(2006.01)i
FI: B01D39/16 E; B01D39/16 C; B01D46/52 A; B32B5/26; D04H3/16

According to International Patent Classification (IPC) or to both national classification and IPC

### B. FIELDS SEARCHED

Minimum documentation searched (classification system followed by classification symbols)

B01D39/16; B01D46/52; B32B5/26; D04H3/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2000-176262 A (DAIKIN INDUSTRIES, LTD.) 27 June 2000 (2000-06-27)<br>claims 1-4, paragraphs [0009], [0011], [0012], [0018], [0019], [0022], [0023], [0027]-[0029] | 1-14 |
| Y | JP 8-226060 A (NIPPON FELT KOGYO KK) 03 September 1996 (1996-09-03)<br>paragraphs [0002], [0015], fig. 1 | 1-14 |
| A | JP 2013-94717 A (NITTO DENKO CORPORATION) 20 May 2013 (2013-05-20) | 1-14 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 October 2024** | **29 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/030137**

| Patent document cited in search report | | | Publication date (day/month/year) | Patent family member(s) | Publication date (day/month/year) |
|---|---|---|---|---|---|
| JP | 2000-176262 | A | 27 June 2000 | EP 1142702 A1<br>claims 1-4, paragraphs [0013].<br>[0017], [0020], [0027], [0028],<br>[0036], [0037], [0048]-[0053]<br>CN 1334770 A<br><br>KR 10-2001-0093807 A | |
| JP | 8-226060 | A | 03 September 1996 | (Family: none) | |
| JP | 2013-94717 | A | 20 May 2013 | (Family: none) | |

## REFERENCES CITED IN THE DESCRIPTION

**Patent documents cited in the description**

- JP 2009297702 A
- WO 2020067182 A